# EUROPEAN PATENT APPLICATION

(11) **EP 4 749 759 A1**
(43) Date of publication of application: **27.05.2026**
(21) Application number: 25205369.9
(22) Date of filing: 29.09.2025
(51) Int. Cl.: H01M 10/42, H01M 10/48

(54) **APPARATUS FOR CHARGE AND DISCHARGE EVALUATION OF SECONDARY BATTERY, AND METHOD FOR CHARGE AND DISCHARGE EVALUATION OF SECONDARY BATTERY**

(30) Priority: 25.11.2024 KR 20240169935
(71) Applicant: Samsung SDI Co., Ltd., Yongin-si, Gyeonggi-do 17084 (KR)
(72) Inventor: LIM, Chaeuk, Yongin-si, 17084 (KR); KIM, Jin Hwan, Yongin-si, 17084 (KR)
(74) Representative: Marks & Clerk LLP

(57) **Abstract**

The present disclosure provides an apparatus for charge and discharge evaluation of a secondary battery, and a method for charge and discharge evaluation of a secondary battery. An apparatus for charge and discharge evaluation of a secondary battery according to the present disclosure includes: a support plate; an end plate disposed opposite to the support plate; a receiving portion that is formed between the support plate and the end plate and receives the secondary battery; a passage penetrating the end plate; a pressure measurement sensor disposed in an outer side of the end plate; and a displacement measurement sensor disposed on the outer side of the end plate, wherein the displacement measurement sensor may measure displacement of the secondary battery in a non-contact manner through the passage.

## Description

### FIELD

The present disclosure relates to an apparatus for charge and discharge evaluation of a secondary battery, and a method for charge and discharge evaluation of a secondary battery.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

When a secondary battery is exposed to a high-temperature environment or a short circuit occurs, a swelling phenomenon may occur as gas is generated inside the battery due to decomposition of the electrolyte contained inside the case and electrode reaction. This may cause the case of the secondary battery to rupture, resulting in fire or explosion due to thermal runaway.

A secondary battery module is composed of secondary battery cells and components that perform specific functions between the cells. In order to ensure that these components function smoothly and prevent thermal runaway, it is necessary to reflect the changes in internal pressure and volume of the cell due to swelling phenomenon in the module design of the secondary battery to secure space between the cells of the secondary battery.

The herein information disclosed in this Background section is for enhancement of understanding of the background of the present disclosure, and therefore, it may contain information that does not constitute related (or prior) art.

### SUMMARY

A problem to be solved by the present disclosure is to provide an apparatus for charge and discharge evaluation of a secondary battery, and a method for charge and discharge evaluation of a secondary battery to solve the herein technical problem.

However, the technical problem to be solved by the present disclosure is not limited to the herein problem, and other problems not mentioned herein, and aspects and features of the present disclosure that would address such problems, will be clearly understood by those skilled in the art from the description of the present disclosure herein.

According to embodiments of the present disclosure for solving the technical problem, there is an apparatus for charge and discharge evaluation of a secondary battery, including: a support plate; an end plate disposed opposite to the support plate; a receiving portion that is formed between the support plate and the end plate and receives the secondary battery; a passage penetrating the end plate; a pressure measurement sensor disposed in an outer side of the end plate; and a displacement measurement sensor disposed on the outer side of the end plate, in which the displacement measurement sensor measures a displacement of the secondary battery in a non-contact manner through the passage.

According to some embodiments of the present disclosure, the displacement measurement sensor may measure the displacement of the secondary battery by emitting electromagnetic waves to the secondary battery through the passage.

According to some embodiments of the present disclosure, the displacement measurement sensor may include a laser coaxial displacement sensor.

An apparatus for charge and discharge evaluation of a secondary battery according to some embodiments of the present disclosure may further include a transparent film that blocks an end portion of the passage facing the receiving portion.

According to some embodiments of the present disclosure, the passage may include one or more passages formed at a location on the end plate corresponding to a center of the secondary battery accommodated in the receiving portion or at a periphery thereof.

According to some embodiments of the present disclosure, the pressure measurement sensor may include a load cell installed on a load plate spaced apart from the end plate.

According to some embodiments of the present disclosure, the load plate may include a through hole corresponding to the passage.

According to some embodiments of the present disclosure, the displacement measurement sensor may measure displacement of the secondary battery in a non-contact manner through a passage and a through hole.

An apparatus for charge and discharge evaluation of a secondary battery according to some embodiments of the present disclosure may further include a spring plate and a fixed plate disposed between a load plate and the displacement measurement sensor, and a spring may be interposed between the spring plate and the fixed plate.

According to some embodiments of the present disclosure, the displacement measurement sensor may include a light source fixedly attached to the fixed plate.

According to embodiments of the present disclosure for solving the technical problem, there is provided a method for charge and discharge evaluation of a secondary battery including: a step of inserting the secondary battery into a receiving portion that is formed between a support plate and an end plate disposed opposite to the support plate; a step of charging and discharging the secondary battery; a step of measuring a pressure applied to the secondary battery by using a pressure measurement sensor disposed in an outer side of the end plate; and a step of measuring displacement of the secondary battery by using a displacement measurement sensor disposed on the outer side of the end plate, in which the displacement measurement sensor measures the displacement of the secondary battery in a non-contact manner through a passage penetrating the end plate.

A method for charge and discharge evaluation of a secondary battery according to some embodiments of the present disclosure may further include a step of evaluating a charge and discharge behavior of the secondary battery based on the measured pressure and displacement.

According to some embodiments of the present disclosure, the step of measuring pressure may include a step of fixing the end plate to fix the displacement of the secondary battery to a specific value.

According to some embodiments of the present disclosure, the step of measuring displacement may include a step of fixing a pressure applied to the secondary battery.

According to some embodiments of the present disclosure, the step of measuring pressure and the step of measuring displacement may be performed simultaneously.

According to some embodiments of the present disclosure, the step of measuring the displacement of the secondary battery may include a step of measuring displacement of the secondary battery in a non-contact manner by emitting electromagnetic waves to the secondary battery through the passage.

According to some embodiments of the present disclosure, the passage may include one or more passages formed at a location on the end plate corresponding to a center of the secondary battery accommodated in the receiving portion or at a periphery thereof.

According to some embodiments of the present disclosure, the pressure measurement sensor may include a load cell installed on a load plate spaced apart from the end plate, and the load plate may include a through hole corresponding to the passage.

According to some embodiments of the present disclosure, the displacement measurement sensor may measure displacement of the secondary battery in a non-contact manner through a passage and a through hole.

According to some embodiments of the present disclosure, a spring plate and a fixed plate are disposed between the load plate and the displacement measurement sensor, and the step of measuring the pressure may include a step of applying pressure to a spring interposed between the spring plate and the fixed plate.

According to some embodiments of the present disclosure, it is possible to provide an evaluation method capable of measuring internal pressure and displacement according to cell behavior and prevent thermal runaway or module rupture due to non-ideal behavior by performing charge and discharge evaluation of a secondary battery cell in a situation similar to a state within a secondary battery module without a separate additional process.

According to some embodiments of the present disclosure, displacement may be measured simultaneously at a plurality of locations of a secondary battery cell through a plurality of passages. Through this, the displacement according to the cell behavior may be simulated as in an actual module environment.

According to some embodiments of the present disclosure, a non-contact displacement sensor may be used to perform secondary battery charge/discharge evaluation using the same apparatus and method regardless of the cell specifications of the secondary battery.

However, aspects and features of the present disclosure are not limited to those described herein, and other aspects and features not mentioned will be clearly understood by a person skilled in the art from the detailed description, described herein. At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic diagram illustrating an apparatus for charge and discharge evaluation of a secondary battery according to embodiments of the present disclosure.
FIG. 2 is an enlarged view of an area around an end plate of the apparatus for charge and discharge evaluation of a secondary battery according to embodiments of the present disclosure.
FIG. 3 is a schematic diagram illustrating an apparatus for charge and discharge evaluation of a secondary battery according to embodiments of the present disclosure.
FIG. 4 is a perspective view illustrating an apparatus for charge and discharge evaluation of a secondary battery according to embodiments of the present disclosure.
FIG. 5 is a schematic diagram illustrating an apparatus for charge and discharge evaluation of a secondary battery according to embodiments of the present disclosure.
FIG. 6 is a perspective view showing a secondary battery according to embodiments of the present disclosure.
FIG. 7 is a cross-sectional view taken along line II-II of the secondary battery according to the embodiment of the present disclosure in FIG. 6.
FIG. 8 is a perspective view showing a module of a secondary battery according to embodiments of the present disclosure.
FIG. 9 is a flowchart showing an example of a method for charge and discharge evaluation of a secondary battery according to embodiments of the present disclosure.
FIG. 10 is a diagram showing the method for charge and discharge evaluation of a secondary battery according to embodiments of the present disclosure.
FIG. 11 is a graph showing an example of secondary battery voltage VB and charging current during CCCV charging and after CCCV charging is terminated.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

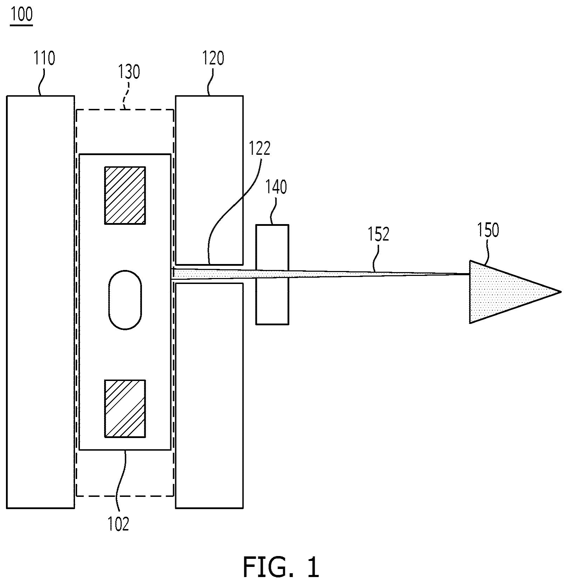

FIG. 1 is a schematic diagram illustrating an apparatus for charge and discharge evaluation of a secondary battery according to embodiments of the present disclosure.

Referring to FIG. 1, an apparatus for charge and discharge evaluation of a secondary battery 100 according to embodiments of the present disclosure may include a support plate 110, an end plate 120, a receiving portion 130 that is formed between the support plate 110 and the end plate 120 and receives a secondary battery 102, a passage 122 penetrating the end plate 120, a pressure measurement sensor 140 disposed on the outer side of the end plate 120, and a displacement measurement sensor 150 disposed on the outer side of the end plate 120.

The support plate 110 may support one side of the secondary battery 102 in the apparatus 100 for charge and discharge evaluation of a secondary battery to fix the position of the secondary battery 102. Specifically, the support plate 110 is a rigid body whose position is fixed in the apparatus 100 for charge and discharge evaluation of a secondary battery, and its material may include a metal such as steel or a high-strength polymer.

The end plate 120 is a plate disposed opposite to the support plate 110 and may support the surface on the opposite side of the secondary battery 102. Specifically, the receiving portion 130 that receives the secondary battery 102 may be positioned between the support plate 110 and the end plate 120. In this configuration, the support plate 110 supports one side of the secondary battery 102, and the end plate 120 supports the opposite side of the secondary battery 102, so that the secondary battery 102 may be inserted into the receiving portion 130 in a fitted manner. That is, the end plate 120 may serve as a guide to fix the displacement of the secondary battery 102 together with the support plate 110.

In embodiments, the end plate 120 and the support plate 110 may have the same size or material.

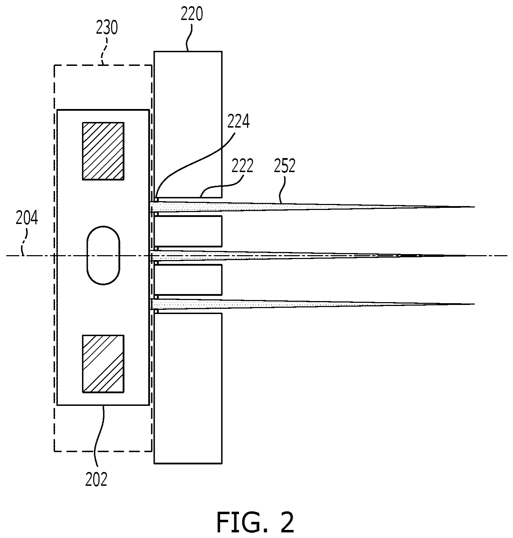

A passage 122 penetrating the end plate 120 may be formed inside the end plate 120. The passage 122 will be described later with reference to FIG. 2.

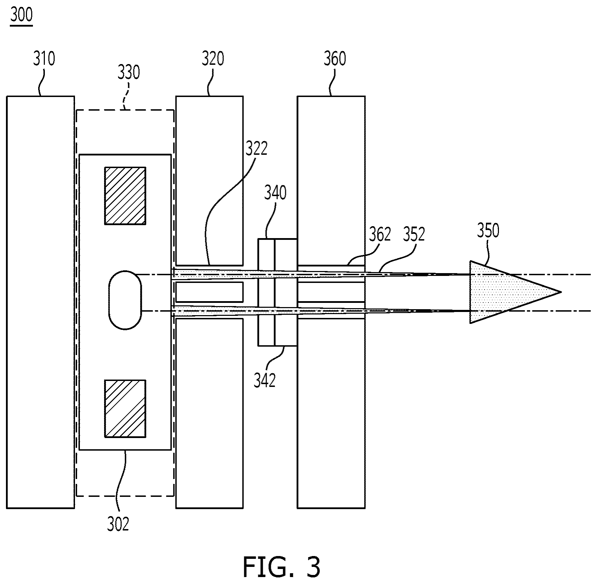

The pressure measurement sensor 140 may precisely measure the pressure generated due to expansion and contraction of the secondary battery 102 during the charging and discharging process. The pressure measurement sensor 140 will be described later with reference to FIG. 3.

The displacement measurement sensor 150 may be disposed on the outer side of the end plate 120. Here, the outer side of the end plate 120 may refer to a side opposite to the side in which the receiving portion 130 is located, based on the end plate 120. That is, the receiving portion 130 in which the secondary battery 102 is received and the displacement measurement sensor 150 are installed facing each other with the end plate 120 as the boundary, and the receiving portion 130 and the displacement measurement sensor 150 may be optically connected through the passage 122 penetrating the end plate 120.

The displacement measurement sensor 150 may measure the displacement of the secondary battery 102, that changes as the charge/discharge evaluation is performed, in a non-contact manner through the passage 122. Specifically, the displacement measurement sensor 150 may measure the displacement of the secondary battery by emitting electromagnetic waves 152 to the secondary battery 102 through the passage 122. According to embodiments, the displacement measurement sensor 150 may be any one of an eddy current sensor, a fiber sensor, a laser sensor, or a vision sensor. For example, the displacement measurement sensor 150 may include a laser coaxial displacement sensor. The electromagnetic waves may for example correspond to visible light, infrared, and/or ultraviolet light.

Here, the laser coaxial displacement sensor may refer to a sensor used to measure the distance to a specific object by using the change in the reflection angle of a laser beam. In embodiments, a laser coaxial displacement sensor may include a laser light source that generates high-precision monochromatic light, an optical element (or beam splitter) that emits a laser beam generated from the laser light source to a measurement target and guides a beam reflected from the measurement target to a light receiving unit, a focusing lens that focuses the laser beam on the measurement target and collects the reflected beam into the light receiving unit, the light receiving unit that detects the reflected laser beam, and a signal processing unit that converts a light-received signal into an electrical signal.

Specifically, a beam generated from a laser light source may be emitted to a measurement target (the surface of a secondary battery 102) through a beam splitter. The emitted beam passes through the passage 122 and is reflected from the surface of the secondary battery 102. The reflected beam passes through the passage 122 again and is focused onto the light receiving unit by the focusing lens. The light receiving unit detects the characteristics (intensity, phase, etc.) of the reflected beam, and the signal processing unit converts this into an electrical signal and analyzes this to calculate the exact distance change from the displacement measurement sensor 150 to the surface of the secondary battery 102.

A displacement measurement sensor 150 according to embodiments of the present disclosure monitors displacement changes, i.e., the degree of expansion and contraction of the surface of the secondary battery 102, in real time through continuous displacement measurements during the charging/discharging process of the secondary battery 102.

According to some embodiments of the present disclosure, a non-contact displacement sensor 150 may be used to perform secondary battery charge/discharge evaluation using the same apparatus and method regardless of the cell specifications of the secondary battery 102. In addition, displacement is measured without physical contact with the secondary battery 102, thereby minimizing the influence of the displacement sensor on the secondary battery during the measurement process.

FIG. 2 is an enlarged view of an area around the end plate 220 of the apparatus for charge and discharge evaluation of a secondary battery according to embodiments of the present disclosure.

Referring to FIG. 2, an apparatus for charge and discharge evaluation of a secondary battery according to embodiments may further include an end plate 220, a passage 222 penetrating the end plate 220, and a transparent film 224 blocking an end of the passage 222 facing a receiving portion 230.

The transparent film 224 may be composed of a chemically resistant material with excellent optical transparency. For example, the chemically resistant material may be substantially to electromagnetic waves 252. For example, the transparent film 224 may be composed of reinforced glass or a transparent polymer material. The transparent film 224 allows electromagnetic waves 252 (which may for example be visible, infrared, and/or ultraviolet light) to pass through, so that a displacement measurement sensor (not shown) may monitor the state of the secondary battery 202 in real time, and by providing physical support together with the end plate 220, it is possible to reduce the case of the secondary battery 202 from being subjected to uneven pressure by the passage 222 when the secondary battery 202 expands and contracts.

The transparent film 224 may be formed at an end of the passage 222 facing the receiving portion 230. Specifically, the transparent film 224 may be heat-sealed or bonded with an adhesive to block the end of the passage 222 facing the receiving portion 230. Through this, the end of the passage 222 facing the receiving portion 230 may be blocked. In embodiments, the end of the passage 222 facing the receiving portion 230 may be sealed with a transparent film 224 so that the receiving portion 230 may be physically isolated by the end plate 220.

According to embodiments of the present disclosure, the passage 222 may include one or more passages, as illustrated in FIG. 2. Specifically, the passage 222 may be composed of a plurality of holes penetrating the end plate 220.

The cross-sectional shape of the passage 222 is not limited to a specific shape and may be designed in various shapes such as a circle, an ellipse, or a polygon. Additionally, the passages 222 may be disposed in a regular pattern or an irregular pattern considering a specific function. In embodiments, the passage 222 may be formed at a location on the end plate 220 corresponding to the center 204 of the secondary battery 202 accommodated in the receiving portion 230. Additionally or alternatively, the passage 222 may be formed around the center 204 of the secondary battery 202. For example, the passage 222 may include a first hole formed at a position on the end plate 220 corresponding to the center 204 of the secondary battery 202 and a plurality of second holes formed radially around the first hole.

According to some embodiments of the present disclosure, displacement may be measured simultaneously at a plurality of locations of the secondary battery 202 through the passage 222 having a plurality of holes. Through this, it is possible to detect uneven expansion and contraction of the entire external shape or a certain portion of the secondary battery 202 that could not be detected by measuring only the displacement of one portion of the secondary battery 202. As a result, the displacement according to the behavior of the secondary battery cell may be simulated as in an actual module environment and related data may be collected.

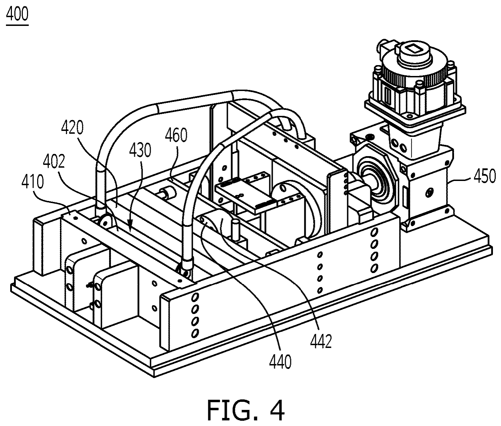

FIG. 3 is a schematic diagram illustrating an apparatus 300 for charge and discharge evaluation of a secondary battery according to embodiments of the present disclosure. In addition, FIG. 4 is a perspective view illustrating an apparatus 400 for charge and discharge evaluation of a secondary battery according to embodiments of the present disclosure. Among the configurations illustrated in FIG. 3 or FIG. 4, any configurations described or duplicated with reference to FIGS. 1 and 2 are omitted.

Referring to FIGS. 3 and 4, a pressure measurement sensor 340, 440 according to embodiments of the present disclosure may include a load cell 342, 442 installed on a load plate 360, 460 spaced apart from an end plate 320, 420.

Here, the load cell 342, 442 may refer to an apparatus that converts force or pressure generated during the charging and discharging process of the secondary battery 302, 402 into an electrical signal. Specifically, in the process of precisely measuring the pressure generated due to expansion and contraction of the secondary battery due to charging and discharging, the load cell 342, 442 in the pressure measurement sensor 340, 440 may continuously receive the internal pressure change value of the secondary battery and convert it into an electrical signal to provide data in real time.

In embodiments, the load plate 360, 460 having the load cell 342, 442 installed thereon may be integral with the end plate 320, 420. Because the support plate 310, 410 is firmly fixed to one side of the apparatus 300, 400 for charge and discharge evaluation of a secondary battery, the pressure and displacement generated as the secondary battery 302, 402 expands may move the end plate 320, 420. Accordingly, the position of the load plate 360, 460 that is integral with the end plate 320, 420 also changes, and the pressure measurement sensor 340, 440 including the load cell 342, 442 may measure the internal pressure of the secondary battery 302, 402 based on this position change value.

According to embodiments of the present disclosure, the load plate 360, 460 may include a through hole 362 corresponding to the passage 322. Specifically, the through hole 362 may refer to a hole that is formed at a location where an extension line formed by the passage 322 meets the load plate 360, 460 and penetrates the load plate 360, 460. Like the passage 322, the cross-sectional shape of the through hole 362 is not limited to a specific shape and may be designed in various shapes such as a circle, an ellipse, or a polygon. Additionally, the through hole 362 may include a plurality of holes penetrating the load plate 360, 460.

Through this, the displacement measurement sensor 350, 450 may measure the displacement of the secondary battery 302, 402 in a non-contact manner through the passage 322 and the through hole 362. Specifically, the displacement measurement sensor 350, 450 may measure the displacement of the secondary battery 302, 402 by emitting electromagnetic waves 352 to the secondary battery 302, 402 through the passage 322 and the through hole 362.

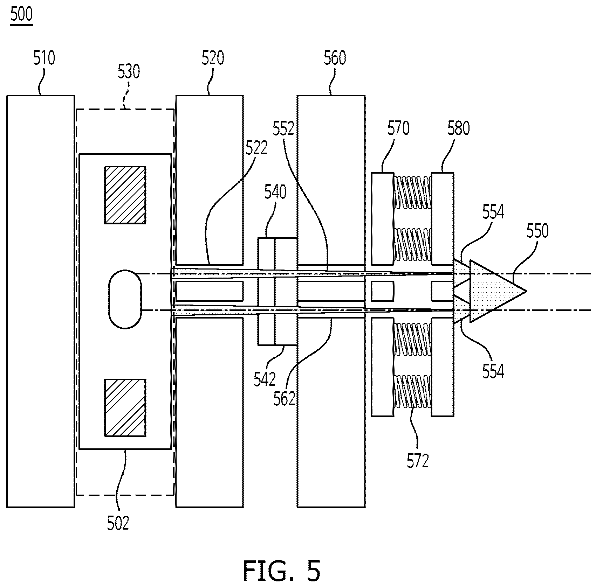

FIG. 5 is a schematic diagram illustrating an apparatus 500 for charge and discharge evaluation of a secondary battery according to embodiments of the present disclosure. Among the configurations illustrated in FIG. 5, any configurations described or duplicated with reference to FIGS. 1 to 4 are omitted.

Referring to FIG. 5, an apparatus 500 for charge and discharge evaluation of a secondary battery according to an embodiment of the present disclosure may further include a spring plate 570 and a fixed plate 580 disposed between the load plate 560 and the displacement measurement sensor 550. The spring plate 570 and the fixed plate 580 are elastic plate-shaped members that may be made of high-strength metal or ceramic, high-strength polymer, etc. Here, the fixed plate 580 may be a rigid body with a fixed position in the apparatus 500 for charge and discharge evaluation of a secondary battery, similar to the support plate 510.

According to embodiments, the displacement measurement sensor 550 may include a light source 554 fixedly attached to the fixed plate 580. Because the fixed plate 580 is fixed in position in the apparatus 500 for charge and discharge evaluation of a secondary battery, the light source 554 may constantly emit electromagnetic waves 552, such as laser beams, to the receiving portion 530 from the same position, regardless of the charge/discharge process of the secondary battery 502 and the resulting expansion.

In embodiments, the load plate 560 having the load cell 542 installed may be integral with the end plate 520 and the spring plate 570.

Because the support plate 510 is firmly fixed to one side of the apparatus 500 for charge and discharge evaluation of a secondary battery, the pressure and displacement generated as the secondary battery 502 expands during charging/discharging may move the end plate 520 toward the pressure measurement sensor 540.

Accordingly, the position of the load plate 560 that is integral with the end plate 520 also changes, and the pressure measurement sensor 540 including the load cell 542 may measure the internal pressure of the secondary battery 502 based on this position change value.

In addition, because the fixed plate 580 is firmly fixed to one side of the apparatus 500 for charge and discharge evaluation of a secondary battery, a complex of the end plate 520, the load plate 560, and the spring plate 570 that expand as the secondary battery 502 is charged/discharged and moves toward the pressure measurement sensor 540 may apply force to the fixed plate 580.

Here, a spring 572 may be interposed between the spring plate 570 and the fixed plate 580. The spring 572 may relieve the force applied to the fixed plate 580 and return the complex of the end plate 520, the load plate 560, and the spring plate 570 to the original position after the charge/discharge evaluation of the secondary battery 502 is completed. In addition, through this, a flexible type of apparatus 500 for charge and discharge evaluation of a secondary battery that may respond to secondary battery 502 cells of various sizes and shapes may be provided.

In embodiments, the displacement measurement sensor 550 may measure the displacement of the secondary battery 502 in a non-contact manner through the passage 522 and the through hole 562. Specifically, the displacement measurement sensor 550 may measure the displacement of the secondary battery 502 by emitting electromagnetic waves 552 to the secondary battery 502 through the passage 522 and the through hole 562.

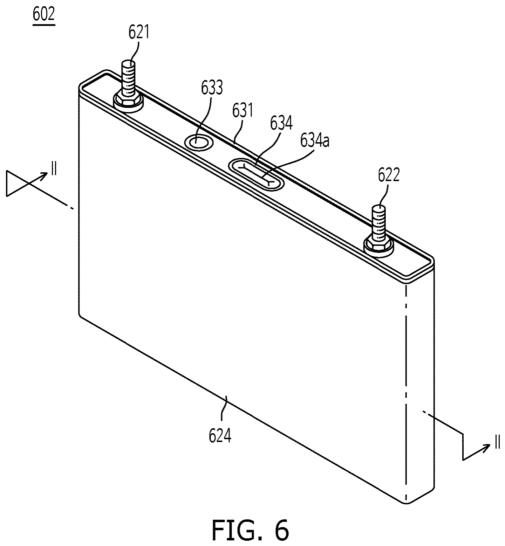

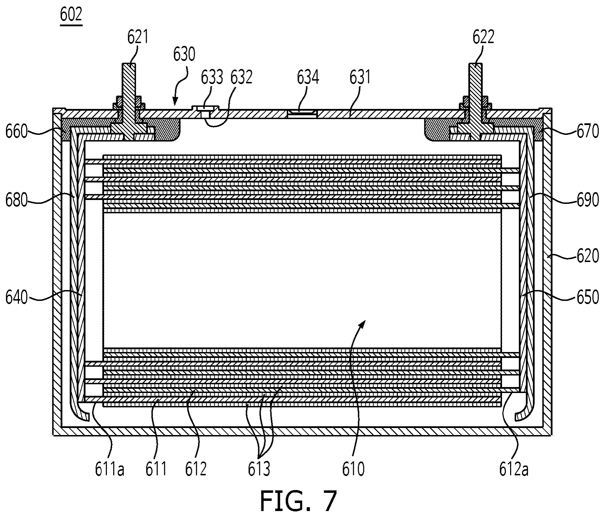

FIG. 6 is a perspective view showing a secondary battery according to embodiments of the present disclosure. Further, FIG. 7 is a cross-sectional view taken along line II-II of the secondary battery according to the embodiment of the present disclosure in FIG. 6. The secondary battery 602 illustrated in FIGS. 6 and 7 may correspond to the secondary batteries 102, 202, 302, 402, 502 shown in FIGS. 1 to 5. The secondary battery 602 may be one of various types of secondary batteries, including a square secondary battery made of Stainless Use Steel (SUS) material or aluminum material.

Referring to FIGS. 6 and 7, the secondary battery 602 according to one or more embodiments may include at least one electrode assembly 610 wound with a separator 613 as an insulator between the positive electrode 611 and the negative electrode 612, a case 620 in which the electrode assembly 610 is received (or accommodated) therein, and a cap assembly 630 coupled to an opening of the case 620.

The secondary battery 602 according to one or more embodiments will now be described as an example of a prismatic lithium ion secondary battery. However, the present disclosure is not limited thereto, and suitable aspects, features and principles described herein may be applied to various other types of secondary batteries, such as lithium polymer secondary battery and/or cylindrical secondary battery.

Each of the positive electrode 611 and the negative electrode 612 may include a current collector made of a thin metal foil having a coated portion on which an active material is coated and an uncoated portion 611a, 612a on which an active material is not coated.

The positive electrode 611 and the negative electrode 612 are wound after interposing the separator 613, which is an insulator, therebetween. However, the present disclosure is not limited thereto, and the electrode assembly 610 may have a structure in which a positive electrode 611 and a negative electrode 612, each made of a plurality of sheets, are alternately stacked with a separator interposed therebetween.

The case 620 may form the overall outer appearance of the secondary battery 602 and may be made of a conductive metal, such as aluminum, aluminum alloy, or nickel-plated steel. In addition, the case 620 may provide a space in which the electrode assembly 610 is accommodated.

The cap assembly 630 may include a cap plate 631 covering an opening in the case 620, and the case 620 and the cap plate 631 may be made of a conductive material. The positive and negative electrode terminals 621 and 622 electrically connected to the positive electrode 611 and the negative electrode 612, respectively, may be installed to penetrate (or extend through) the cap plate 631 and protrude outwardly therethrough.

In addition, outer peripheral surfaces (e.g., circumferential surfaces) of upper pillars of the positive and negative electrode terminals 621 and 622 protruding outwardly from the cap plate 631 may be threaded and may be fixed to the cap plate 631 by utilizing nuts. However, the present disclosure is not limited thereto, and the positive and negative electrode terminals 621 and 622 may have a rivet structure and may be riveted or welded to the cap plate 631.

In addition, the cap plate 631 may be made of a thin plate and may be coupled to the opening in the case 620, and an electrolyte injection port 632 into which a sealing stopper 633 may be installed may be located (e.g., formed) in the cap plate 631, and a vent portion 634 having a notch 634a may be installed.

The positive and negative electrode terminals 621 and 622 may be electrically connected to current collectors including first and second current collectors 640 and 650 (hereinafter referred to as positive and negative current collectors) by being bonded or coupled (e.g., by welding) to the positive uncoated portion 611a and the negative electrode uncoated portion 612a, respectively. For example, the positive and negative electrode terminals 621 and 622 may be coupled by welding to the positive and negative electrode current collectors 640 and 650, respectively. However, the present disclosure is not limited thereto, and the positive and negative electrode terminals 621 and 622 and the positive and negative electrode current collectors 640 and 650 may be integrally formed in one or more embodiments.

In addition, an insulation member may be installed between the electrode assembly 610 and the cap plate 631. The insulation member may include first and second lower insulation members 660 and 670, and each of the first and second lower insulation members 660 and 670 may also have a portion located between the electrode assembly 610 and the cap plate 631.

In addition, according to one or more embodiments of the present disclosure, one end of a separation member may face one side of the electrode assembly 610 and may be installed between the insulation member and the positive or negative electrode terminals 621 and 622. In one or more embodiments, the separation member may include first and second separation members 680 and 690.

In such an embodiment, first ends of the first and second separation members 680 and 690 installed to face one side of the electrode assembly 610 may be respectively installed between the first and second lower insulation members 660 and 670 and the positive and negative electrode terminals 621 and 622.

Accordingly, the positive and negative electrode terminals 621 and 622, which may be coupled by welding to the positive and negative electrode current collectors 640 and 650, may be coupled to first ends of the first and second lower insulation members 660 and 670 and the first and second separation members 680 and 690.

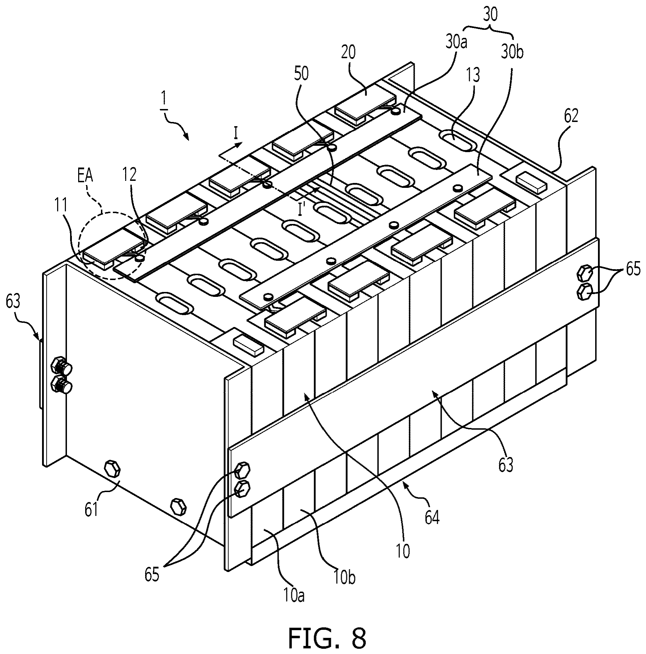

FIG. 8 is a perspective view showing a module of a secondary battery according to embodiments of the present disclosure. A secondary battery module (or battery module) 1 may be composed of secondary battery cells and components that perform specific functions between the cells. In order to ensure that these components function smoothly and prevent thermal runaway, when designing a secondary battery module, it is necessary to secure space between the cells of the secondary battery by predicting the internal pressure and volume changes of the secondary battery cell due to the swelling phenomenon.

To this end, the apparatus 100, 200, 300, 400, 500 for charge and discharge evaluation of a secondary battery herein shown in FIGS. 1 to 5 may provide data necessary for the design of the secondary battery module 1 by measuring the internal pressure and volume change of the secondary battery cell included in the secondary battery module 1 described herein.

Referring to FIG. 8, a battery module 1 according to the present disclosure has terminal portions 11, 12, includes a plurality of battery cells 10 arranged in one direction, a connection tab 20 connecting a battery cell 10a to an adjacent battery cell 10b, and a protection circuit module 30 having one end connected to the connection tab 20. The protection circuit module 30 may be a battery management system (BMS). In addition, the connection tab 20 includes a body part 22 that contacts the terminal portions 11, 12 between adjacent battery cells 10a, 10b and an extension part that extends from the body part 22 and is connected to the protection circuit module 30. The connection tab 20 may be a bus bar.

Each battery cell 10 may include a battery case, an electrode assembly received (or accommodated) in the battery case, and an electrolyte. The electrode assembly and the electrolyte react electrochemically to store and release (e.g., generate) energy. Terminal parts 11 and 12 electrically connected to the connection tab 20 and a vent 13 as a discharge passage for gas generated inside the battery case may be provided on one side of (e.g., an upper side of) the battery cell 10. The terminal parts 11 and 12 of the battery cell 10 may be a positive electrode terminal 11 and a negative electrode terminal 122 having different polarities from each other, and the terminal parts 11 and 12 of the adjacent battery cells 10a and 10b may be electrically connected to each other in series or parallel by the connection tab 20, to be described in more detail herein. Although a serial connection has been described as an example, the connection structure is not limited thereto, and various connection structures may be employed as desired or necessary. In addition, the number and arrangement of battery cells is not limited to the structure shown in FIG. 8 and may be changed as desired or necessary.

The plurality of battery cells 10 may be arranged in (e.g., may be stacked in) one direction so that the wide surfaces of the battery cells 10 face each other, and the plurality of battery cells 10 may be fixed by the housings 61, 62, 63, and 64. The housings 61, 62, 63, and 64 may include a pair of end plates 61 and 62 facing the wide surfaces of the battery cell 10 and a side plate 63 and a bottom plate 64 connecting the pair of end plates 61 and 62 to each other. The side plate 63 may support side surfaces of the battery cells 10, and the bottom plate 64 may support bottom surfaces of the battery cells 10. In addition, the pair of end plates 61 and 62, the side plate 63 and the bottom plate 64 may be connected by bolts 65 and/or any other suitable fastening members and methods known to those of ordinary skill in the art.

The protection circuit module 30 may have electronic components and protection circuits mounted thereon and may be electrically connected to connection tabs 20, to be described in more detail later. The protection circuit module 30 includes a first protection circuit module 30a and a second protection circuit module 30b extending along the direction in which the plurality of battery cells 100 are arranged in different locations. The first protection circuit module 30a and the second protection circuit module 30b may be spaced from each other at a suitable interval (e.g., a predetermined interval) and arranged parallel to each other to be electrically connected to adjacent connection tabs 20, respectively. For example, the first protection circuit module 30a extends on one side of the upper portion of the plurality of battery cells 10 along the direction in which the plurality of battery cells 10 are arranged, and the second protection circuit module 30b extends to the other upper side of the plurality of battery cells 10 along the direction in which the plurality of battery cells 10 are arranged. The second protection circuit module 30b may be spaced from the first protection circuit module 30a at a suitable interval (e.g., a predetermined interval) with the vents 34 interposed therebetween but may be disposed parallel to the first protection circuit module 30a. As such, the two protection circuit modules are spaced from each other side-by-side along the direction in which the plurality of battery cells 10 are arranged, thereby reducing or minimizing the area of the printed circuit board (PCB) constituting the protection circuit module. By separately configuring the protection circuit module into two protection circuit modules, unnecessary PCM area can be reduced or minimized. In addition, the first protection circuit module 30a and the second protection circuit module 30b may be connected to each other by a conductive connection member 50. One side of the conductive connection member 50 is connected to the first protection circuit module 30a, and the other side thereof is connected to the second protection circuit module 30b so that the two protection circuit modules 30a and 30b can be electrically connected with each other.

The connection may be performed by any one of soldering, resistance welding, laser welding, projection welding and/or any other suitable connection methods known to those of ordinary skill in the art.

In addition, the connection member 50 may be, for example, an electric wire. In addition, the connection member 50 may be made of a material having elasticity or flexibility. By the connecting member 50, it may be possible to check and manage whether the voltage, temperature, and/or current of the plurality of battery cells 10 are normal. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connection member 50.

In addition, when the battery cell 10 swells, shocks may be absorbed by the elasticity or flexibility of the connection member 50, thereby preventing the first and second protection circuit modules 30a and 30b from being damaged.

In addition, the shape and structure of the connection member 50 is not limited to the shape and structure shown in FIG. 8.

As described herein, because the protection circuit module 30 is provided as the first and second protection circuit modules 30a and 30b, the area of the PCB constituting the protection circuit module can be reduced or minimized, and the space inside the battery module can be secured, which improves work efficiency by facilitating a fastening work for connecting the connection tab 20 and the protection circuit module 30 and repair work if (or when) an abnormality is detected in the battery module.

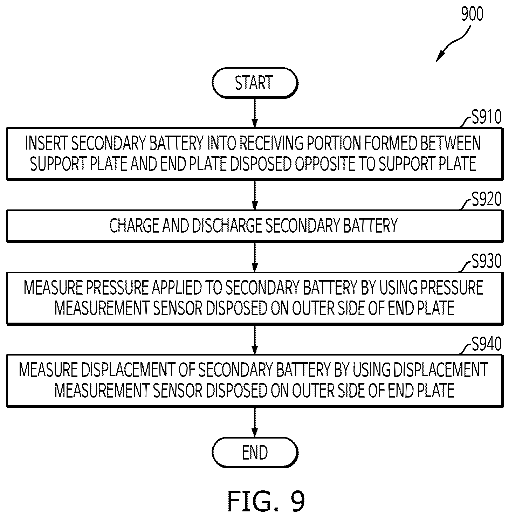

FIG. 9 is a flowchart showing an example of a method for charge and discharge evaluation of a secondary battery according to embodiments of the present disclosure.

A method 900 for charge and discharge evaluation of a secondary battery according to embodiments of the present disclosure may be initiated by inserting a secondary battery into a receiving portion formed between a support plate and an end plate disposed opposite to the support plate (S910).

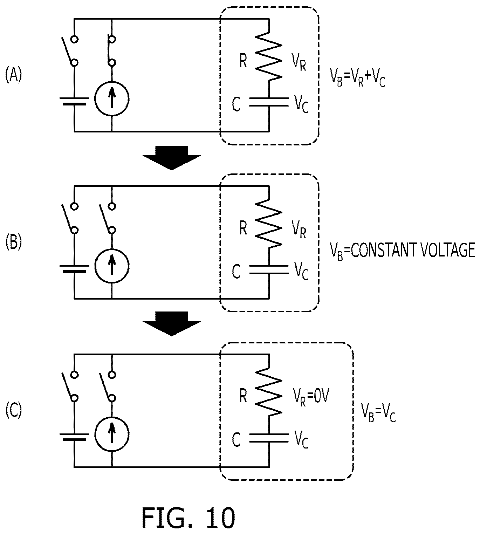

After that, the secondary battery may be charged and discharged (S920). In this case, the method of charging and discharging the secondary battery will be described later with reference to FIG. 10.

Thereafter, the pressure applied to the secondary battery may be measured using a pressure measurement sensor disposed on the outer side of the end plate (S930). Here, the pressure measurement sensor may include a load cell installed on a load plate spaced apart from the end plate, and the load plate may include a through hole corresponding to the passage.

According to embodiments, the step of measuring pressure (S930) may include a step of fixing the end plate to fix the displacement of the secondary battery to a specific value.

According to embodiments, a spring plate and a fixed plate are disposed between the load plate and the displacement measurement sensor, and the step of measuring the pressure may include a step of applying pressure to a spring interposed between the spring plate and the fixed plate.

Afterwards, the displacement of the secondary battery may be measured using the displacement measurement sensor disposed on the outer side of the end plate (S940). Here, the displacement measurement sensor may measure the displacement of the secondary battery in a non-contact manner through a passage penetrating the end plate. The passage may include one or more passages formed at a location on the end plate corresponding to the center of the secondary battery accommodated in the receiving portion or at a periphery thereof. Specifically, the step (S940) of measuring the displacement of the secondary battery may include a step of measuring displacement of the secondary battery in a non-contact manner by emitting electromagnetic waves to the secondary battery through the passage.

According to embodiments, the step (S940) of measuring the displacement may include a step of fixing a pressure applied to the secondary battery. Further, according to embodiments, the step (S930) of measuring pressure and the step (S940) of measuring displacement may be performed simultaneously.

A method 900 for charge and discharge evaluation of a secondary battery according to embodiments of the present disclosure may further include a step of evaluating a charge and discharge behavior of the secondary battery based on the measured pressure and displacement.

According to some embodiments of the present disclosure, it is possible to provide an evaluation method capable of measuring internal pressure and displacement according to cell behavior and prevent thermal runaway or module rupture due to non-ideal behavior by performing charge and discharge evaluation of a secondary battery cell in a situation similar to a state within a secondary battery module without a separate additional process.

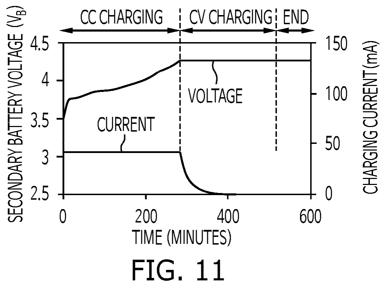

FIG. 10 is a drawing showing a method for charge and discharge of a secondary battery according to embodiments of the present disclosure. In addition, FIG. 11 is a graph showing an example of secondary battery voltage VB and charging current during CCCV charging and after CCCV charging is terminated.

In the method for charge and discharge evaluation of a secondary battery according to the present disclosure, the secondary battery may be charged and discharged, for example, by a CCCV charging method. Referring to FIG. 10, CCCV charging is a charging method in which constant current (CC) charging is performed until the voltage reaches a suitable or reference voltage (e.g., a predetermined voltage), and then constant voltage (CV) charging is performed until the amount of current flowing decreases, specifically, until the end current value.

During CC charging, as shown in FIG. 10(A), a switch of a constant current power supply is turned on and a switch of a constant voltage power supply is turned off so that a constant current I flows through the secondary battery. During this period, because the current I is constant, a voltage VR applied to an internal resistor R is also constant according to Ohm's law (VR=R×I). Meanwhile, a voltage VC applied to a secondary battery capacitor C increases with time. Therefore, a secondary battery voltage VB may rise over time.

When (or if) the secondary battery voltage VB reaches a suitable or reference voltage (e.g., a predetermined voltage), for example, about 4.3 V, CC charging is switched to CV charging. During CV charging, as shown in FIG. 10(B), the switch of the constant voltage power supply is turned on and the switch of the constant current power supply is turned off so that the secondary battery voltage VB is constant. Meanwhile, the voltage VC applied to the secondary battery capacitor C increases with time. Because VB = VR + VC is satisfied, the voltage VR applied to the internal resistor R decreases with time. As the voltage VR applied to the internal resistor R decreases, the current I flowing through the secondary battery may also decrease according to Ohm's law (VR=R×I).

When (or if) the current I flowing through the secondary battery reaches a suitable or reference current (e.g., a predetermined current), for example, about 0.01 C, charging is terminated. When (or if) CCCV charging is finished, all switches are turned off and the current I becomes 0, as shown in FIG. 10(C). At this time, the voltage VR applied to the internal resistor R becomes 0 V. Accordingly, even when voltage drop is prevented across the internal resistor R, the secondary battery voltage VB does not substantively decrease.

FIG. 11 shows a graph of a secondary battery voltage VB and charging current during CCCV charging and after CCCV charging is terminated. Even after CCCV charging is terminated, the secondary battery voltage VB does not substantively decrease.

The method for charge and discharge of a secondary battery included in the method for charge and discharge evaluation of a secondary battery is not limited to the CCCV charging method described with reference to FIGS. 10 and 11. Here, the secondary battery may include all batteries that may repeatedly provide electricity by charging and discharging. For example, the secondary battery may be a lithium battery cell, a sodium battery cell, etc. However, the scope of the present disclosure is not limited thereto, and in embodiments, when the secondary battery is a lithium battery cell, it may be used in an electric vehicle (EV) because it has excellent life characteristics and high-rate characteristics. For example, it may be used in hybrid vehicles such as plug-in hybrid electric vehicles (PHEV). In addition, secondary batteries may be used in a wide range of fields requiring power storage, including but not limited to smartphones, tablet PCs, electric bicycles, power tools, and electric vehicles.

Although the present disclosure has been described with reference to embodiments and drawings illustrating aspects thereof, the present disclosure is not limited thereto. Various modifications and variations can be made by a person skilled in the art to which the present disclosure belongs within the scope of the claims.

Embodiments are set out in the following clauses:
1. An apparatus for charge and discharge evaluation of a secondary battery, comprising:
   a support plate;
   an end plate disposed opposite to the support plate;
   a receiving portion that is formed between the support plate and the end plate and receives the secondary battery;
   a passage penetrating the end plate;
   a pressure measurement sensor disposed in an outer side of the end plate; and
   a displacement measurement sensor disposed on the outer side of the end plate, wherein
   the displacement measurement sensor measures a displacement of the secondary battery in a non-contact manner through the passage.
2. The apparatus for charge and discharge evaluation of a secondary battery according to clause 1, wherein
   the displacement measurement sensor measures the displacement of the secondary battery by emitting electromagnetic waves to the secondary battery through the passage.
3. The apparatus for charge and discharge evaluation of a secondary battery according to any preceding clause, wherein
   the displacement measurement sensor comprises a laser coaxial displacement sensor.
4. The apparatus for charge and discharge evaluation of a secondary battery according to any preceding clause, further comprising:
   a transparent film that blocks an end portion of the passage facing the receiving portion.
5. The apparatus for charge and discharge evaluation of a secondary battery according to any preceding clause, wherein
   the passage comprises one or more passages formed at a location on the end plate corresponding to a center of the secondary battery accommodated in the receiving portion or at a periphery of the receiving portion.
6. The apparatus for charge and discharge evaluation of a secondary battery according to any preceding clause, wherein
   the pressure measurement sensor comprises a load cell installed on a load plate spaced apart from the end plate.
7. The apparatus for charge and discharge evaluation of a secondary battery according to clause 6, wherein
   the load plate comprises a through hole corresponding to the passage.
8. The apparatus for charge and discharge evaluation of a secondary battery according to clause 7, wherein
   the displacement measurement sensor measures the displacement of the secondary battery in a non-contact manner through the passage and the through hole.
9. The apparatus for charge and discharge evaluation of a secondary battery according to any of clauses 6 to 8, further comprising:
   a spring plate and a fixed plate disposed between the load plate and the displacement measurement sensor, wherein
   a spring is interposed between the spring plate and the fixed plate.
10. The apparatus for charge and discharge evaluation of a secondary battery according to clause 9, wherein
   the displacement measurement sensor comprises a light source fixedly attached to the fixed plate.
11. A method for charge and discharge evaluation of a secondary battery comprising:
   inserting the secondary battery into a receiving portion formed between a support plate and an end plate disposed opposite to the support plate;
   charging and discharging the secondary battery;
   measuring a pressure applied to the secondary battery by using a pressure measurement sensor disposed in an outer side of the end plate; and
   measuring a displacement of the secondary battery by using a displacement measurement sensor disposed on the outer side of the end plate, wherein
   the displacement measurement sensor measures the displacement of the secondary battery in a non-contact manner through a passage penetrating the end plate.
12. The method for charge and discharge evaluation of a secondary battery according to clause 11, further comprising:
   evaluating a charge and discharge behavior of the secondary battery, based on the measured pressure and displacement.
13. The method for charge and discharge evaluation of a secondary battery according to clause 11, wherein
   the measuring a pressure comprises
   fixing the end plate to fix the displacement of the secondary battery to a specific value.
14. The method for charge and discharge evaluation of a secondary battery according to any of clauses 11 to 13, wherein
   the measuring the displacement comprises
   fixing a pressure applied to the secondary battery.
15. The method for charge and discharge evaluation of a secondary battery according to any of clauses 11 to 14, wherein
   the measuring the pressure and measuring the displacement are performed simultaneously.
16. The method for charge and discharge evaluation of a secondary battery according to any of clauses 11 to 15, wherein
   the measuring the displacement of the secondary battery comprises
   measuring the displacement of the secondary battery in a non-contact manner by emitting electromagnetic waves to the secondary battery through the passage.
17. The method for charge and discharge evaluation of a secondary battery according to any of clauses 11 to 16, wherein
   the passage comprises one or more passages formed at a location on the end plate corresponding to a center of the secondary battery accommodated in the receiving portion or at a periphery of the receiving portion.
18. The method for charge and discharge evaluation of a secondary battery according to any of clauses 11 to 17, wherein
   the pressure measurement sensor comprises a load cell installed on a load plate spaced apart from the end plate, and
   the load plate comprises a through hole corresponding to the passage.
19. The method for charge and discharge evaluation of a secondary battery according to clause 18, wherein
   the displacement measurement sensor measures the displacement of the secondary battery in a non-contact manner through the passage and the through hole.
20. The method for charge and discharge evaluation of a secondary battery according to clause 18 or clause 19, wherein
   a spring plate and a fixed plate are disposed between the load plate and the displacement measurement sensor, and
   the measuring the pressure comprises applying pressure to a spring interposed between the spring plate and the fixed plate.

## Claims

1. An apparatus (100) for charge and discharge evaluation of a secondary battery (102), comprising:
a support plate (110);
an end plate (120) disposed opposite to the support plate (110);
a receiving portion (130) that is formed between the support plate (110) and the end plate (120) and receives the secondary battery (102);
a passage (122) penetrating the end plate (120);
a pressure measurement sensor (140) disposed in an outer side of the end plate (120); and
a displacement measurement sensor (150) disposed on the outer side of the end plate (120), wherein the displacement measurement sensor (150) is configured to measure a displacement of the secondary battery (102) in a non-contact manner through the passage (122).

2. The apparatus (100) for charge and discharge evaluation of a secondary battery (102) according to claim 1, wherein
the displacement measurement sensor (150) is configured to measure the displacement of the secondary battery (102) by emitting electromagnetic waves (152) to the secondary battery (102) through the passage (122).

3. The apparatus (100) for charge and discharge evaluation of a secondary battery (102) according to claim 1 or claim 2, wherein
the displacement measurement sensor (150) comprises a laser coaxial displacement sensor.

4. The apparatus (200) for charge and discharge evaluation of a secondary battery according to any preceding claim, further comprising:
a transparent film (224) that blocks an end portion of the passage (222) facing the receiving portion (230).

5. The apparatus (100) for charge and discharge evaluation of a secondary battery (102) according to any preceding claim, wherein
the passage (122) comprises one or more passages (222) formed at a location on the end plate (220) corresponding to a center (204) of the secondary battery (202) accommodated in the receiving portion (230) or at a periphery of the receiving portion (230).

6. The apparatus (300, 400) for charge and discharge evaluation of a secondary battery (302, 402) according to any preceding claim, wherein
the pressure measurement sensor (340, 440) comprises a load cell (342, 442) installed on a load plate (360, 460) spaced apart from the end plate (320, 420); and
the load plate (360, 460) comprises a through hole (362) corresponding to the passage (322).

7. The apparatus (300, 400) for charge and discharge evaluation of a secondary battery (302, 402) according to claim 6, wherein
the displacement measurement sensor (350, 450) is configured to measure the displacement of the secondary battery (302, 402) in a non-contact manner through the passage (322) and the through hole (362).

8. The apparatus (500) for charge and discharge evaluation of a secondary battery (502) according to claim 6 or claim 7, further comprising:
a spring plate (570) and a fixed plate (580) disposed between the load plate (560) and the displacement measurement sensor (550), wherein
a spring (572) is interposed between the spring plate (570) and the fixed plate (580).

9. The apparatus (500) for charge and discharge evaluation of a secondary battery (502) according to claim 8, wherein
the displacement measurement sensor (550) comprises a light source (554) fixedly attached to the fixed plate (580).

10. A method (900) for charge and discharge evaluation of a secondary battery comprising:
inserting the secondary battery into a receiving portion (130) formed between a support plate (110) and an end plate (120) disposed opposite to the support plate (110) (S910);
charging and discharging the secondary battery (S920);
measuring a pressure applied to the secondary battery by using a pressure measurement sensor (140) disposed in an outer side of the end plate (120) (S930); and
measuring a displacement of the secondary battery by using a displacement measurement sensor (150) disposed on the outer side of the end plate (120) (S940), wherein
the displacement measurement sensor (150) measures the displacement of the secondary battery in a non-contact manner through a passage (122) penetrating the end plate (120).

11. The method (900) for charge and discharge evaluation of a secondary battery according to claim 10, further comprising:
evaluating a charge and discharge behavior of the secondary battery, based on the measured pressure and displacement.

12. The method (900) for charge and discharge evaluation of a secondary battery according to claim 10 or claim 11, wherein
the measuring a pressure (S930) comprises
fixing the end plate (120) to fix the displacement of the secondary battery to a specific value.

13. The method (900) for charge and discharge evaluation of a secondary battery according to any of claims 10 to 12, wherein
the measuring the displacement (S940) comprises
fixing a pressure applied to the secondary battery.

14. The method (900) for charge and discharge evaluation of a secondary battery according to any of claims 10 to 13, wherein
the measuring the displacement (S940) of the secondary battery comprises
measuring the displacement of the secondary battery in a non-contact manner by emitting electromagnetic waves (152) to the secondary battery through the passage (122).

15. The method (900) for charge and discharge evaluation of a secondary battery according to any of claims 10 to 14, wherein
the pressure measurement sensor (140) comprises a load cell (342, 442) installed on a load plate (360, 460) spaced apart from the end plate (320, 420),
the load plate (360, 460) comprises a through hole (362) corresponding to the passage (322), and
the displacement measurement sensor (150) measures the displacement of the secondary battery in a non-contact manner through the passage (322) and the through hole (362).
